# EUROPEAN PATENT APPLICATION

(11) **EP 4 398 509 A1**
(43) Date of publication of application: **10.07.2024**
(21) Application number: 22862489.6
(22) Date of filing: 05.01.2022
(51) Int. Cl.: H04L 5/00, H04W 24/06, H04W 72/04, G06N 3/02

(54) **AI TECHNOLOGY-BASED CHANNEL STATE INFORMATION FEEDBACK METHOD AND DEVICE**

(30) Priority: 31.08.2021 CN 202111017202
(71) Applicant: China Academy Of Information And Communications, Beijing 100191 (CN)
(72) Inventor: LIU, Xiaofeng, Beijing 100191 (CN); WANG, Zhiqin, Beijing 100191 (CN); DU, Ying, Beijing 100191 (CN); WEI, Guiming, Beijing 100191 (CN); XU, Fei, Beijing 100191 (CN)
(74) Representative: Boult Wade Tennant LLP
(86) International application number: PCT/CN2022/070310
(87) International publication number: WO 2023/029338

(57) **Abstract**

The present application discloses an AI technology-based channel state information feedback method, including the following steps: indicating at least one to-be-used AI model by first information; indicating a first feedback period by second information; and processing CSI original data and generating result data by the selected AI model; wherein the first feedback period is used for transmitting the result data. The present application further includes apparatuses applying the method. The present application solves the problems of low CSI feedback accuracy and large signal codebook quantity in a traditional technology.

## Description

The present application claims priority to Chinese patent application No. 202111017202.3, entitled "AI Technology Channel State Information Feedback Method and Device", and filed on August 31, 2021 to the China National Intellectual Property Administration, and the entire content of which is incorporated herein by reference.

### TECHNICAL FIELD

The present application relates to the technical field of wireless communication, in particular to an AI technology-based channel state information feedback method and device.

### BACKGROUND

Mobile communication networks contain a large amount of data resources, and the rational utilization and exploration of 5G data resources using an artificial intelligence (AI) technology may effectively improve the promotion of mobile communication systems. Problems faced in the mobile communication systems are complex and diverse, and researches show that the performance of mobile communication network sides and wireless sides may be effectively improved through AI-based algorithms.

Feedback of channel state information (CSI) in the wireless communication systems is the key to system design. A sending end needs to know the CSI of a receiving end, so as to select a sending scheme. Traditional CSI feedback is performed by a codebook-based feedback method. In a 5G NR system, Type I and Type II codebooks are specially designed to complete the CSI feedback work from a terminal to a base station.

A current CSI feedback method in a 5G standard is that the base station configures the codebooks, periods and positions used for the CSI feedback for the terminal, and after the terminal completes channel measurement, the CSI feedback is performed at a corresponding position according to the configuration of the base station. The specific content of the CSI feedback is the serial number of the codebooks configured by the base station.

The CSI feedback may be completed without the use of the codebooks by using the AI technology. The present disclosure provides a method and apparatus for completing the CSI feedback using the AI technology, which may use fewer information bits to complete higher-accuracy feedback to the CSI.

### SUMMARY

The present application provides an AI technology-based channel state information feedback method and device, which solves the problems of low CSI feedback accuracy and large signal codebook quantity in a traditional technology.

In a first aspect, the present application provides an AI technology-based channel state information feedback method, including the following steps:
indicating at least one to-be-used AI model by first information;
indicating a first feedback period by second information; and
processing CSI original data and generating result data by the selected AI model; wherein
the first feedback period is used for transmitting the result data.

Preferably, the method further includes the following steps:
indicating a second feedback period by third information, wherein the second feedback period is used for transmitting the original date.

Preferably, the AI model in the first information includes a neural network structure and parameters; and the first information is indicated by high-level information carried by a PDSCH, or the first information is jointly indicated by DCI carried by a PDCCH and the high-level information carried by the PDSCH.

Preferably, the second information includes information of a start time point and a cycle of the first feedback period; and the second information is transmitted through DCI carried by a PDCCH.

Preferably, the third information includes information of a start time point and a cycle of the second feedback period; and the third information is transmitted through DCI carried by a PDCCH.

Preferably, the second information and the third information are transmitted in the same DCI, and the cycle of the second feedback period is a multiple of the cycle of the first feedback period.

Preferably, the second information is further used for selecting an AI model.

Preferably, the selected AI model corresponds to a CSI pilot configuration.

The method of any embodiment of the first aspect of the present application is applied to a network device, and includes the following steps:
sending the first information by the network device, wherein the first information is used for indicating the at least one to-be-used AI model;
sending the second information by the network device, wherein the second information is used for indicating the first feedback period; and
receiving the result data by the network device according to the first feedback period, wherein the result data is generated by processing the CSI original data using the selected AI model.

Preferably, the method further includes the following steps:
sending the third information by the network device, wherein the third information is used for indicating the second feedback period; and
receiving the CSI original data by the network device according to the second feedback period.

Further preferably, the method further includes the following steps:
sending information of the CSI pilot configuration by the network device, wherein the CSI pilot configuration corresponds to the selected AI model.

The method of any embodiment of the first aspect of the present application is applied to a terminal device, and includes the following steps:
receiving the first information by the terminal device, wherein the first information is used for indicating the at least one to-be-used AI model;
receiving the second information by the terminal device, wherein the second information is used for indicating the first feedback period;
processing the CSI original data and generating the result data by the terminal device using the selected AI model; and
sending the result data by the terminal device according to the first feedback period.

Preferably, the method further includes the following steps:
receiving the third information by the terminal device, wherein the third information is used for indicating the second feedback period; and
sending the CSI original data by the terminal device according to the second feedback period.

Optionally, the method further includes the following steps: the second information further including an indication for selecting the AI model, selecting the AI model by the terminal device according to the second information.

Optionally, the method further includes the following steps: receiving information of the CSI pilot configuration by the terminal device, wherein the CSI pilot configuration corresponds to the selected AI model; and selecting the AI model by the terminal device according to the information of the CSI pilot configuration.

In a second aspect, the present application further provides a network device, configured to implement any method in the first aspect of the present application, and at least one module in the network device is configured to implement at least one of the following functions: sending first information, wherein the first information is used for indicating at least one to-be-used AI model; sending second information, wherein the second information is used for indicating a first feedback period; and receiving result data according to the first feedback period, wherein the result data is generated by processing CSI original data using the selected AI model.

Preferably, at least one module in the network device is configured to implement at least one of the following functions: sending third information, wherein the third information is used for indicating a second feedback period; and receiving the CSI original data according to the second feedback period.

In a third aspect, the present application further provides a terminal device, configured to implement the method of any embodiment of the present application, and at least one module in the terminal device is configured to implement at least one of the following functions: receiving first information, wherein the first information is used for indicating at least one to-be-used AI model; receiving second information, wherein the second information is used for indicating a first feedback period; processing CSI original data and generating result data by the selected AI model; and sending the result data according to the first feedback period.

Preferably, at least one module in the terminal device is configured to implement at least one of the following functions: receiving third information, wherein the third information is used for indicating a second feedback period; and sending the CSI original data according to the second feedback period.

In a fourth aspect, the present application further provides a mobile communication device, including: a memory, a processor and a computer program stored on the memory and capable of running on the processor, wherein the computer program, when executed by the processor, implements steps of the method described in any embodiment of the first aspect of the present application.

In a fifth aspect, the present application further provides a computer readable medium, storing a computer program thereupon, wherein the computer program, when executed by a processor, implements steps of the method described in any embodiment of the first aspect of the present application.

In a sixth aspect, the present application further provides a mobile communication system, including the network device described in any embodiment of the present application and the terminal device described in any embodiment of the present application.

The above at least one technical solution adopted in the embodiments of the present application can achieve the following beneficial effects:
the present disclosure improves the performance of a mobile system by using an AI technology. The provided method and apparatus can use the AI technology to complete CSI feedback with higher accuracy with fewer information bits compared with an existing CSI feedback solution based on codebooks. The method and apparatus provided in the present disclosure can further achieve data collection on a network device side and complete AI model accuracy judgment and model update.

### BRIEF DESCRIPTION OF THE DRAWINGS

Fig. 1 is an embodiment flow chart of a method of the present application.
Fig. 2 is an embodiment flow chart of a method of the present application applied to a network device.
Fig. 3 is an embodiment flow chart of a method of the present application applied to a terminal device.
Fig. 4 is a first embodiment schematic diagram of a communication process of a network device and a terminal device.
Fig. 5 is a second embodiment schematic diagram of a communication process of a network device and a terminal device.
Fig. 6 is a third embodiment schematic diagram of a communication process of a network device and a terminal device.
Fig. 7 is a fourth embodiment schematic diagram of a communication process of a network device and a terminal device.
Fig. 8 is an embodiment schematic diagram of a network device.
Fig. 9 is an embodiment schematic diagram of a terminal device.
Fig. 10 is a schematic structural diagram of a network device in another embodiment of the present disclosure.
Fig. 11 is a block diagram of a terminal device in another embodiment of the present disclosure.

### DETAILED DESCRIPTION

Considering a communication system composed of network devices and terminal devices, a network device may perform data sending and receiving on a plurality of terminal devices simultaneously. The network device includes a network data unit and a network control unit. The terminal device includes a terminal data unit and a terminal control unit. The network data unit and the terminal data unit send data through a downlink data sharing channel (PDSCH) and an uplink data sharing channel (PUSCH) separately. The network control unit and the terminal control unit exchange control information with each other through a synchronization and broadcast channel (SS/PBCH), a downlink control channel (PDCCH), an uplink access channel (PRACH) and a control channel (PUCCH). The SS/PBCH sends synchronization signals and broadcast information, and the terminal control unit performs synchronization and acquires basic system information by receiving the SS/PBCH. The PDCCH sends downlink control information (DCI) to perform relevant contents of specific sending formats for the PDSCH, PUSCH and PUCCH. After the terminal data unit receives the data, the terminal control unit initiates a PRACH-based access to the network device according to control information sent by the network control unit and a data reception situation of the terminal data unit, or provides feedback on whether the data correctly receives ACK/NACK information, or sends the data from the terminal to the network. A basic time transmission unit in the system is symbols, with 14 symbols forming a time slot. A length of one time slot is 1/2 k ms, wherein k is a positive integer, corresponding to different sub-carrier intervals respectively, for example, when k=0, 1, 2, 3, 4, 5 and 6, the corresponding sub-carrier intervals are 15 kHz, 30 kHz, 60 kHz, 120 kHz, 240 kHz, 480 kHz and 960 kHz.

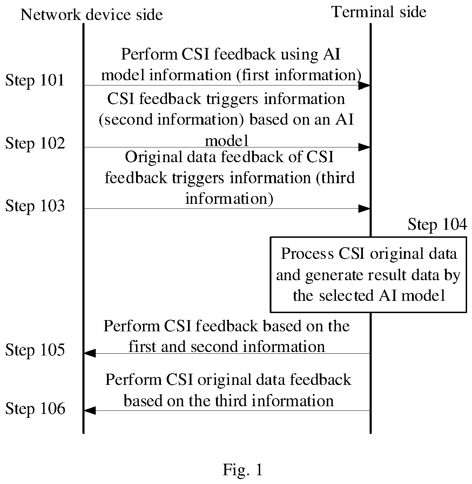

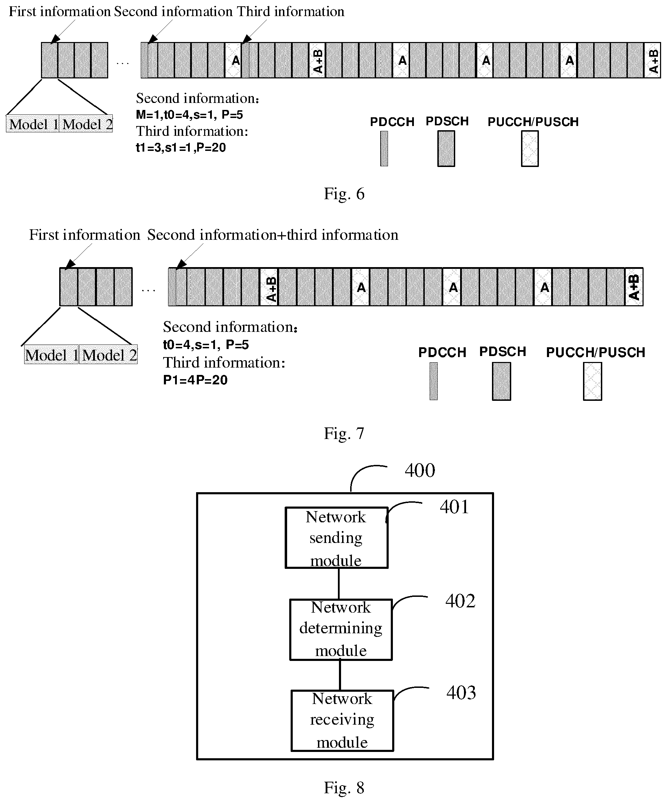

The technical solutions provided by the embodiments of the present application are described in detail below in conjunction with accompanying drawings. The embodiments of the method of the present application are as shown in Figs. 1-7, and the composition of the network device and the terminal device is as shown in embodiments of Figs. 8-11 of the present application.

Fig. 1 is an embodiment flow chart of a method of the present application.

In a first aspect, the present application provides an AI technology-based channel state information feedback method, including at least one part of the following steps 101-105:
step 101, at least one to-be-used AI model is indicated by first information.

Preferably, the AI model in the first information includes a neural network structure and parameters; and the first information is indicated by high-level information carried by a PDSCH, or the first information is jointly indicated by DCI carried by a PDCCH and the high-level information carried by the PDSCH.

For example, the network device notifies the terminal of a model used for CSI feedback through the first information; and the model indicated by the first information includes a basic structure of the neural network and main parameters, and the number N of the models included in the first information may be greater than 1.

Step 102, a first feedback period is indicated by second information.

The first feedback period is used for transmitting result data of CSI, and how to generate the result data is shown in step 104.

Preferably, the second information includes information of a start time point and a cycle of the first feedback period; and the second information is transmitted through DCI carried by a PDCCH.

As an optional solution, the second information is further used for selecting an AI model.

As another optional solution, the selected AI model corresponds to a CSI pilot configuration.

For example, when the number N of the models indicated by the first information is greater than 1, the second information may include direct indication to the models that need to be used; and when the second information does not include the direct indication to the used models, the models adopted by the terminal are determined according to the CSI pilot configuration which is currently used by the network device.

Step 103, a second feedback period is indicated by third information, wherein the second feedback period is used for transmitting the original data.

Preferably, the method further includes step 103.

Preferably, the third information includes information of a start time point and a cycle of the second feedback period; and the third information is transmitted through DCI carried by a PDCCH.

Preferably, the second information and the third information are transmitted in the same DCI, and the cycle of the second feedback period is a multiple of the cycle of the first feedback period.

Step 104, the CSI original data is processed, and the result data is generated by the selected AI model.

It is assumed that model-based CSI feedback information performed according to the second information is A, and CSI information which is not processed by the model and performed according to the third information is B, then when A and B are sent in the same time slot, B is data of A before processed by the AI model.

In step 104, the terminal device receives the first, second and third information, and prepares relevant data according to the information.

Step 105, CSI feedback transmission is performed based on the first and second information.

The terminal device completes AI model-based CSI feedback according to the first and second information.

Step 106, feedback transmission of the CSI original data is performed based on the third information.

The terminal device sends CSI relevant original data according to indication of the third information.

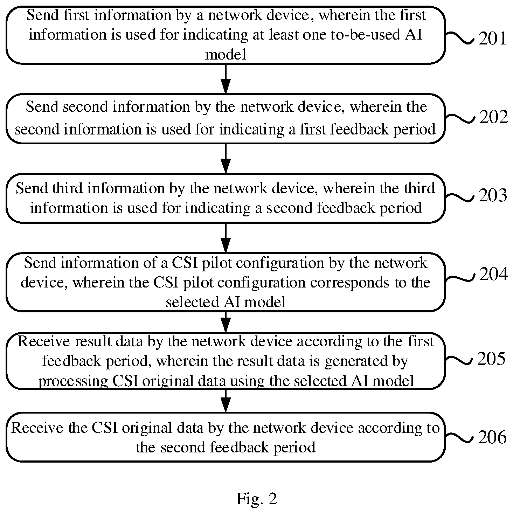

According to the technical solution of steps 101-106, the terminal device needs to receive the model (the first information) configured by the network device before performing the AI model-based CSI feedback, and performs corresponding feedback according to triggering information (the second information). In order to better assist the network device in performing accuracy judgment of the model and updating the model regularly, the terminal further needs to send original CSI information to the network device. This process is implemented by the network device by sending the third information. Please refer to the embodiments of Figs. 2-7 below for details.

Fig. 2 is an embodiment flow chart of a method of the present application applied to a network device.

The method described of any embodiment of the first aspect of the present application is applied to a network device, and includes the following steps 201-206:
step 201, first information is sent by the network device, wherein the first information is used for indicating at least one to-be-used AI model.

The first information may be indicated by high-level information carried by a PDSCH; and the content of the first information may be jointly indicated by DCI carried by a PDCCH and the high-level information carried by the PDSCH.

Step 202, second information is sent by the network device, wherein the second information is used for indicating a first feedback period.

The network device notifies a terminal, through the second information, to use the first information to indicate the model to perform CSI feedback. The second information is sent by the DCI carried by the PDCCH, and includes a start time point, a feedback cycle and other information for CSI feedback performed by the model indicated by the first information.

Step 203, third information is sent by the network device, wherein the third information is used for indicating a second feedback period.

The network device may notify the terminal, through the third information, to feed back CSI information that is not processed by the model. The third information is sent by the DCI carried by the PDCCH, and includes a time point, a cycle and other information for sending the feedback information.

The third information and the second information may be sent in the same DCI information. When the third information and the second information are sent in the same DCI, the feedback cycle indicated by the third information may be a multiple of the cycle indicated by the second information.

A feedback resource indicated by the third information may be a PUCCH or a PUSCH.

Step 204, information of a CSI pilot configuration is sent by the network device, wherein the CSI pilot configuration corresponds to the selected AI model.

Step 205, result data is received by the network device according to the first feedback period, wherein the result data is generated by processing CSI original data using the selected AI model.

Step 206, the CSI original data is received by the network device according to the second feedback period.

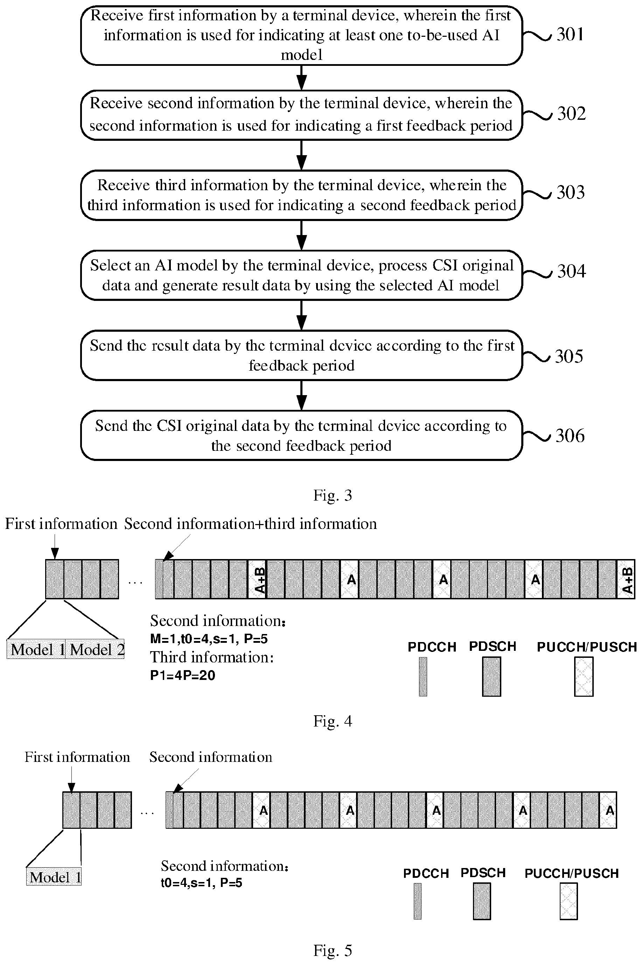

Fig. 3 is an embodiment flow chart of a method of the present application applied to a terminal device.

The method of any embodiment of the first aspect of the present application is applied to a terminal device, and includes the following steps:
step 301, first information is received by the terminal device, wherein the first information is used for indicating at least one to-be-used AI model;
step 302, second information is received by the terminal device, wherein the second information is used for indicating a first feedback period;
step 303, third information is received by the terminal device, wherein the third information is used for indicating a second feedback period; and
step 304, the terminal device selects an AI model, processes CSI original data and generates result data by using the selected AI model.

Optionally, if the second information further includes an indication for selecting an AI model, the terminal device selects the AI model according to the second information.

If the second information does not include indication for selecting the AI model, the terminal device receives information of a CSI pilot configuration, wherein the CSI pilot configuration corresponds to the selected AI model; and the terminal device selects the AI model according to the information of the CSI pilot configuration.

Step 305, the result data is sent by the terminal device according to the first feedback period; and
step 306, the CSI original data is sent by the terminal device according to the second feedback period.

Fig. 4 is a first embodiment schematic diagram of a communication process of a network device and a terminal device.

In this embodiment, the network device sends the first information through a PDSCH. The first information includes N=2 sets of models, corresponding to CSI feedback models used in two CSI configurations, such as a 16-port configuration and an 8-port configuration of channel state information pilot (CSI-RS) respectively. The 2 sets of models may be deep neural network (DNN) models or convolutional neural network (CNN) models, each consisting of a neuron arrangement mode and parameters associated with every neuron.

After the terminal receives the first information, the network device sends the DCI carried by the PDCCH to the terminal, and the DCI includes the second information. The second information includes a parameter M indicating the terminal to adopt one of the N sets of models for CSI feedback. At the same time, the second information includes a cycle P and a starting time of feedback. The starting time of feedback is composed of a time slot number t0 after the PDCCH where the second information is carried and a starting symbol s, such as the s=lst symbol after t0=4 time slots. A typical value of the feedback cycle is a plurality of time slots, such as 5 time slots.

The DCI including the second information and sent by the network device to the terminal may also include the third information at the same time. When the third information and the second information are sent in the same DCI, the feedback cycle indicated by the third information may be an integer multiple of the feedback cycle of the second information. For example, the second information indicates the feedback cycle P is equal to 4 time slots, and the feedback cycle P1 indicated by the third information is 4 times the feedback cycle indicated by the second information, namely P1=4P. At the same time, the third information may not indicate the start time point of feedback, and a time point starting to feed back the data indicated by the third information coincides with a time point starting to feed back the data indicated by the second information.

The terminal device starts CSI A feedback with the cycle P on the PUCCH/PUSCH at a moment t0+1 after the second information is sent, and feedback of CSI original data B with the cycle P1 on the PUCCH/PUSCH at the moment t0+1 after the third information is sent according to what indicated by the first, second and third information from the network device.

Fig. 5 is a second embodiment schematic diagram of a communication process of a network device and a terminal device.

In this embodiment, the network device sends the first information through the PDSCH. The first information includes N=1 set of models, and the models may be deep neural network (DNN) models or convolutional neural network (CNN) models, each consisting of a neuron arrangement mode and parameters associated with every neuron.

After the terminal receives the first information, the network device sends the DCI carried by the PDCCH to the terminal, and the DCI includes the second information. The second information includes a cycle P and a starting time of feedback. The starting time of feedback is composed of a time slot number t0 after the PDCCH where the second information is carried and a starting symbol s, such as the s=lst symbol after t0=4 time slots. A typical value of the feedback cycle is a plurality of time slots, such as 5 time slots.

The terminal device starts CSI A feedback with the cycle P on the PUCCH/PUSCH at a moment t0+1 after the second information is sent according to what indicated by the first and second information from the network device.

Fig. 6 is a third embodiment schematic diagram of a communication process of a network device and a terminal device.

In this embodiment, the network device sends the first information through the PDSCH. The first information includes N=2 sets of models, corresponding to applied CSI feedback models under two CSI configurations, such as a 16-port configuration and an 8-port configuration of channel state information pilot (CSI-RS) respectively. The 2 sets of models may be deep neural network (DNN) models or convolutional neural network (CNN) models, each consisting of a neuron arrangement mode and parameters associated with every neuron.

After the terminal receives the first information, the network device sends the DCI carried by the PDCCH to the terminal, and the DCI includes the second information. The second information includes a parameter M indicating the terminal to adopt one of the N sets of models for the CSI feedback. At the same time, the second information includes a cycle P and a starting time of feedback. The starting time of feedback is composed of a time slot number t0 after the PDCCH where the second information is carried and a starting symbol s, such as the s=lst symbol after t0=4 time slots. A typical value of the feedback cycle is a plurality of time slots, such as 5 time slots.

The third information is sent by the network device to the terminal. When the third information and the second information are not sent in the same DCI, the feedback cycle P1 and the starting time of feedback are indicated by the third information. The starting time of feedback is composed of a time slot number t1 after the PDCCH where the third information is carried and a starting symbol s1, such as the s=lst symbol after t1=3 time slots. A typical value of the feedback cycle is a plurality of time slots, such as 16 time slots.

The terminal device starts CSI A feedback with the cycle P on the PUCCH/PUSCH at a moment t0+1 after the second information is sent, and feedback of CSI original data B with the cycle P1 on the PUCCH/PUSCH at the moment t1+1 after the third information is sent according to what indicated by the first and second information from the network device.

Fig. 7 is a fourth embodiment schematic diagram of a communication process of a network device and a terminal device.

In this embodiment, the network device sends the first information through a PDSCH. The first information includes N=2 sets of models, corresponding to CSI feedback models used in two CSI configurations, such as a port 16 configuration and a port 8 configuration of channel state information pilot (CSI-RS) respectively. The 2 sets of models may be deep neural network (DNN) models or convolutional neural network (CNN) models, each consisting of a neuron arrangement mode and parameters associated with every neuron.

After the terminal receives the first information, the network device sends the DCI carried by the PDCCH to the terminal, and the DCI includes the second information. The second information does not indicate the terminal by adopting specific N sets of models, the terminal makes decisions according to the port number of monitored CSI information pilot, if the CSI-RS adopts a port 16, a model 1 is selected, and if the CSI-RS adopts a port 8, a model 2 is selected. At the same time, the second information includes a cycle P and a starting time of feedback. The starting time of feedback is composed of a time slot number t0 after the PDCCH where the second information is carried and a starting symbol s, such as the s= 1 st symbol after t0=4 time slots. A typical value of the feedback cycle is a plurality of time slots, such as 5 time slots.

The DCI including the second information and sent by the network device to the terminal may also include the third information at the same time. When the third information and the second information are sent in the same DCI, the feedback cycle indicated by the third information may be an integer multiple of the feedback cycle of the second information. For example, the second information indicates the feedback cycle P=4, and the feedback cycle P1 indicated by the third information is 4 times the feedback cycle indicated by the second information, namely P1=4P. At the same time, the third information may not indicate the start time point of feedback, and a time point starting to feed back the data indicated by the third information coincides with a time point starting to feed back the data indicated by the second information.

The terminal device starts CSI A feedback with the cycle P on the PUCCH/PUSCH at a moment t0+1 after the second information is sent, and feedback of CSI original data B with the cycle P1 on the PUCCH/PUSCH at the moment t0+1 after the third information is sent according to what indicated by the first, second and third information from the network device.

Fig. 8 is an embodiment schematic diagram of a network device.

An embodiment of the present application further provides a network device, using the method in any embodiment of the present application. At least one module in the network device is configured to: send first information, wherein the first information is used for indicating at least one to-be-used AI model; send second information, wherein the second information is used for indicating a first feedback period; and receive result data according to the first feedback period, wherein the result data is generated by processing CSI original data using the selected AI model.

In another embodiment of the network device, at least one module is further configured to: send third information, wherein the third information is used for indicating a second feedback period; and receive the CSI original data according to the second feedback period.

In order to implement the above technical solutions, the present application provides a network device 400, including a network sending module 401, a network determining module 402 and a network receiving module 403.

The network sending module is configured to send at least one of first information, second information, third information and information of a CSI pilot configuration.

The network determining module is configured to determine the first information according to a to-be-used AI model; determine the second information according to a first feedback period; determine the third information according to a second feedback period; determine the second information according to the selected AI model; or determine the information of the CSI pilot configuration according to the selected AI model, and a corresponding relationship between the information of the CSI pilot configuration and the AI model.

The network receiving module is configured to receive the CSI original data and/or CSI result data.

A specific method for implementing the network sending module, the network determining module and the network receiving module is as described in each method embodiment of the present application, which will not be repeated here.

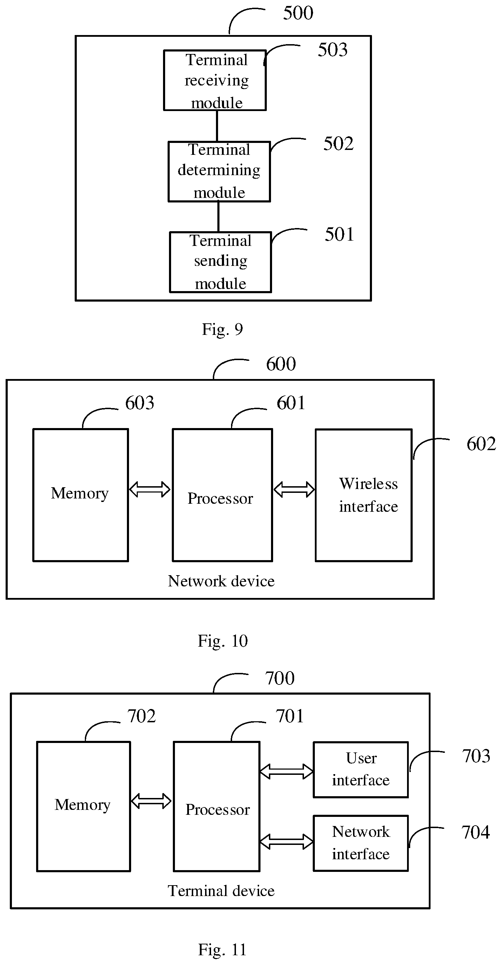

Fig. 9 is an embodiment schematic diagram of a terminal device.

The present application further provides a terminal device, using the method in any embodiment of the present application. At least one module of the terminal device is configured to: receive first information, wherein the first information is used for indicating at least one to-be-used AI model; receive second information, wherein the second information is used for indicating a first feedback period; process CSI original data and generate result data by the selected AI model; and send the result data according to the first feedback period.

In another embodiment of the terminal device, at least one module is further configured to: receive third information, wherein the third information is used for indicating a second feedback period; and send the CSI original data according to the second feedback period.

In order to implement the above technical solutions, the present application provides a terminal device 500, including a terminal sending module 501, a terminal determining module 502 and a terminal receiving module 503.

The terminal receiving module is configured to receive at least one of first information, second information, third information and information of a CSI pilot configuration.

The terminal determining module is configured to determine a to-be-used AI model according to the first information; determine a first feedback period according to the second information; determine a second feedback period according to the third information; determine the selected AI model according to the second information, or determine a selected AI model according to the information of the CSI pilot configuration and a corresponding relationship between the information of the CSI pilot configuration and the AI model; and process CSI original data according to the selected AI model to obtain CSI result data.

The terminal sending module is configured to send the CSI original data and/or CSI result data.

A specific method for implementing the terminal sending module, the terminal determining module and the terminal receiving module is as described in each method embodiment of the present application, which will not be repeated here.

The terminal device described in the present application may refer to a mobile terminal device.

Fig. 10 shows a schematic structural diagram of a network device in another embodiment of the present disclosure. As shown in the figure, a network device 600 includes a processor 601, a wireless interface 602 and a memory 603. The wireless interface may be a plurality of components, namely including a transmitter and a receiver, which provides units for being in communication with various other apparatuses on a transmission medium. The wireless interface achieves a communication function with the terminal device and processes wireless signals through a receiving apparatus and a transmitting apparatus, and data carried by its signals communicates with the memory or processor through an internal bus structure. The memory 603 includes a computer program for executing any embodiment of the present application, and the computer program runs or changes on the processor 601. Circuits of the memory, processor and wireless interface are connected through a bus system. The bus system includes a data bus, a power bus, a control bus and a state signal bus, which will not be repeated here.

Fig. 11 is a block diagram of a terminal device in another embodiment of the present disclosure. The terminal device 700 includes at least one processor 701, a memory 702, a user interface 703 and at least one network interface 704. All components in the terminal device 700 are coupled together through the bus system. The bus system is configured to achieve connection and communication between the components. The bus system includes a data bus, a power bus, a control bus and a state signal bus.

The user interface 703 may include a display, a keyboard or a clicking device, such as a mouse, a trackball, a touch board, a touch screen or the like.

The memory 702 stores an executable module or data structure. The memory may store an operating system and an application program. The operating system includes various system programs, such as a framework layer, a core library layer and a driving layer, which is used for implementing various basic services and processing hardware-based tasks. The application program includes various application programs, such as a media player and a browser, which is used for implementing various application services.

In the embodiment of the present disclosure, the memory 702 includes a computer program for executing any embodiment of the present application, and the computer program runs or changes on the processor 701.

The memory 702 includes a computer readable storage medium, and the processor 701 reads information in the memory 702 and completes steps of the above method in conjunction with hardware thereof. Specifically, the computer readable storage medium stores a computer program, and the computer program, when executed by the processor 701, implements all steps of the method embodiment in any above embodiment.

The processor 701 may be an integrated circuit chip, and has a signal processing capability. In an implementation process, steps of the method of the present application may be completed by using an integrated logic circuit of hardware in the processor 701 or instructions in a form of software. The processor 701 may be a general-purpose processor, a digital signal processor, an application specific integrated circuit, a field programmable gate array or other programmable logic devices, a discrete gate or a transistor logic device, or a discrete hardware component. It may implement or execute methods, steps and logic block diagrams disclosed in the embodiments of the present disclosure. The general-purpose processor may be a microprocessor, or the processor may be any conventional processor or the like. The steps of the methods disclosed with reference to the embodiments of the present disclosure may be directly executed and completed by using a hardware decoding processor, or may be performed and completed by using a combination of hardware and software modules in the decoding processor.

Those skilled in the art should understand that the embodiments of the present disclosure may be provided as methods, systems, or computer program products. Therefore, the present disclosure may take the form of a full hardware embodiment, a full software embodiment, or an embodiment combining software and hardware. In a typical configuration, a device of the present application includes one or more central processing units (CPUs), an input/output user interface, a network interface, and a memory.

Besides, the present disclosure may adopt the form of a computer program product implemented on one or more computer available storage media (including but not limited to a disk memory, a CD-ROM, an optical memory and the like) containing computer available program codes.

Therefore, the present application further provides a computer readable medium, storing a computer program thereupon, and the computer program, when executed by a processor, implements steps of the method described in any embodiment of the present application. For example, the memories 603 and 702 of the present disclosure may include a non-permanent memory, a random access memory (RAM) and/or a non-volatile memory in a computer readable medium, such as a read only memory (ROM) or a flash RAM.

The computer readable medium includes permanent and non-permanent, movable and non-movable media, and information storage may be achieved by any method or technology. Information may be a computer readable instruction, a data structure, a program module, or other data. Examples of the computer storage medium include, but are not limited to, a phase random access memory (PRAM), a static random access memory (SRAM), a dynamic random access memory (DRAM), other types of random access memory (RAM), a read-only memory (ROM), an electrically erasable programmable read-only memory (EEPROM), a flash memory or other memory technologies, a read-only optical disc read-only memory (CD-ROM), a digital versatile disc (DVD) or other optical storage magnetic cassette tapes, magnetic disk storage or other magnetic storage devices, or any other non transmission medium, which may be used to store information that may be accessed by the computing device. According to the definition in this article, the computer readable medium does not include temporary computer transitory media, such as modulated data signals and carriers.

Based on embodiments of Figs. 8-11, the present application further provides a mobile communication system, including at least one embodiment of any terminal device in the present application and at least one embodiment of any network device in the present application.

It also needs to be noted that the terms "include", "contain", or any other variation thereof are intended to cover non-exclusive inclusions, so that a process, method, commodity, or device that includes a series of elements not only includes those elements, but also other elements that are not explicitly listed, or also includes elements inherent in such the process, method, commodity, or device. Without further limitations, an element limited by "include a/an..." does not exclude other same elements existing in the process, the method, the article, or the device that includes the element.

It further needs to be noted that, "first", "second" and "third" in the present application are intended to distinguish a plurality of objects of the same name. Unless otherwise specified, there is no other specific meanings.

The above are the only embodiments of the present application and are not intended to limit the present application. For those skilled in the art, the present application may have various modifications and changes. Any modifications, equivalent substitutions, improvements, etc. made within the spirit and principles of the present application shall be included within the scope of the claims of the present application.

## Claims

1. An AI technology-based channel state information feedback method, comprising the following steps:
indicating at least one to-be-used AI model by first information;
indicating a first feedback period by second information; and
processing CSI original data and generating result data by the selected AI model; wherein
the first feedback period is used for transmitting the result data.

2. The method according to claim 1, further comprising the following steps:
indicating a second feedback period by third information, wherein the second feedback period is used for transmitting the original data.

3. The method according to claim 1, wherein
the AI model in the first information comprises a neural network structure and parameters; and
the first information is indicated by high-level information carried by a PDSCH, or the first information is jointly indicated by DCI carried by a PDCCH and the high-level information carried by the PDSCH.

4. The method according to claim 1, wherein
the second information comprises information of a start time point and a cycle of the first feedback period; and
the second information is transmitted through DCI carried by a PDCCH.

5. The method according to claim 2, wherein
the third information comprises information of a start time point and a cycle of the second feedback period; and
the third information is transmitted through DCI carried by a PDCCH.

6. The method according to claim 2, wherein
the second information and the third information are transmitted in the same DCI, and a cycle of the second feedback period is a multiple of a cycle of the first feedback period.

7. The method according to claim 1, wherein
the second information is further used for selecting an AI model.

8. The method according to claim 1, wherein
the selected AI model corresponds to a CSI pilot configuration.

9. The method according to any one of claims 1-8, applied to a network device, and comprising the following steps:
sending the first information by the network device, wherein the first information is used for indicating the at least one to-be-used AI model;
sending the second information by the network device, wherein the second information is used for indicating the first feedback period; and
receiving the result data by the network device according to the first feedback period, wherein the result data is generated by processing the CSI original data using the selected AI model.

10. The method according to claim 9, further comprising the following steps:
sending the third information by the network device, wherein the third information is used for indicating the second feedback period; and
receiving the CSI original data by the network device according to the second feedback period.

11. The method according to claim 9, further comprising the following steps:
sending information of the CSI pilot configuration by the network device, wherein the CSI pilot configuration corresponds to the selected AI model.

12. The method according to any one of claims 1-8, applied to a terminal device, and comprising the following steps:
receiving the first information by the terminal device, wherein the first information is used for indicating at least one to-be-used AI model;
receiving the second information by the terminal device, wherein the second information is used for indicating the first feedback period;
processing the CSI original data and generating the result data by the terminal device using the selected AI model; and
sending the result data by the terminal device according to the first feedback period.

13. The method according to claim 12, further comprising the following steps:
receiving the third information by the terminal device, wherein the third information is used for indicating the second feedback period; and
sending the CSI original data by the terminal device according to the second feedback period.

14. The method according to claim 12, further comprising the following steps:
the second information further comprising an indication for selecting the AI model, selecting the AI model by the terminal device according to the second information.

15. The method according to claim 12, further comprising the following steps:
receiving information of a CSI pilot configuration by the terminal device, wherein the CSI pilot configuration corresponds to the selected AI model; and
selecting the AI model by the terminal device according to the information of the CSI pilot configuration.

16. A network device, configured to implement the method according to any one of claims 1-11, wherein at least one module in the network device is configured to implement at least one of the following functions: sending first information, wherein the first information is used for indicating at least one to-be-used AI model; sending second information, wherein the second information is used for indicating a first feedback period; and receiving result data according to the first feedback period, wherein the result data is generated by processing CSI original data using the selected AI model.

17. The network device according to claim 16, wherein at least one module in the network device is configured to implement at least one of the following functions: sending third information, wherein the third information is used for indicating a second feedback period; and receiving the CSI original data according to the second feedback period.

18. A terminal device, configured to implement the method according to any one of claims 1-8 and 12-15, wherein at least one module in the terminal device is configured to implement at least one of the following functions: receiving first information, wherein the first information is used for indicating at least one to-be-used AI model; receiving second information, wherein the second information is used for indicating a first feedback period; processing CSI original data and generating result data by the selected AI model; and sending the result data according to the first feedback period.

19. The terminal device according to claim 18, wherein at least one module in the terminal device is configured to implement at least one of the following functions: receiving third information, wherein the third information is used for indicating a second feedback period; and sending the CSI original data according to the second feedback period.

20. A mobile communication device, comprising: a memory, a processor and a computer program stored on the memory and capable of running on the processor, wherein the computer program, when executed by the processor, implements steps of the method according to any one of claims 1-15.

21. A computer readable medium, storing a computer program thereupon, wherein the computer program, when executed by a processor, implements steps of the method according to any one of claims 1-15.

22. A mobile communication system, comprising at least one network device according to claim 16 or 17 and/or at least one terminal device according to claim 18 or 19.
